# EUROPÄISCHE PATENTSCHRIFT

(11) **EP 1 360 147 B1**
(45) Veröffentlichungstag und Bekanntmachung des Hinweises auf die Patenterteilung: **14.11.2007**
(21) Anmeldenummer: 02711865.2
(22) Anmeldetag: 13.02.2002
(51) Int. Cl.: C01G 23/053

(54) **VERFAHREN ZUR GEWINNUNG VON TITANDIOXID AUS AUFSCHLUSSRÜCKSTÄNDEN EINES SULFATVERFAHRENS**
METHOD FOR OBTAINING TITANIUM DIOXIDE FROM SULFATE PULPING RESIDUES
PROCEDES POUR OBTENIR DU DIOXYDE DE TITANE A PARTIR DE RESIDUS DE DESAGREGATION D'UNE REDUCTION EN PATE AU SULFATE

(30) Priorität: 13.02.2001 DE 10106539
(43) Veröffentlichungstag der Anmeldung: 12.11.2003
(73) Patentinhaber: Tronox Pigments International GmbH, 8001 Zürich (CH)
(72) Erfinder: AUER, Gerhard, 47800 Krefeld (DE); VINCENTZ, Georg, 47829 Krefeld (DE); JULIUS, Udo, 47506 Neukirchen-Vluyn (DE); LAUBACH, Benno, 47809 Krefeld (DE); BAUMANN, Frank, 47802 Krefeld (DE); KREMER, Alfred, 47829 Krefeld (DE); SCHUY, Werner, 47918 Tönisvorst (DE); RÖSSLER, Helmut, 47800 Krefeld (DE)
(74) Vertreter: HOFFMANN EITLE
(86) Internationale Anmeldenummer: PCT/EP2002/001520
(87) Internationale Veröffentlichungsnummer: WO 2002/064506

(56) Entgegenhaltungen:
- EP-A- 0 659 688
- DE-A- 2 951 749
- DE-A- 19 725 018
- DE-C- 4 434 315
- G. BUXBAUM: "Industrial Inorganic Pigments, 2nd Edition" 1998 , WILEY VCH , WEINHEIM XP002203237 in der Anmeldung erwähnt Seite 51 -Seite 53

## Beschreibung

Die Erfindung betrifft Verfahren zur Gewinnung von Titandioxid aus Aufschlussrückständen, die als Abfall des herkömmlichen Sulfatverfahrens zur Herstellung von Titandioxid erhalten werden.

Wie in Industrial Inorganic Pigments (Hrsg. G. Buxbaum, Wiley-VCH, Weinheim, 2. Auflage 1998, S. 51-53) oder in Ullmann's Enzyklopädie der technischen Chemie, 4. Ausgabe, Band 15 (1979), beschrieben, wird beim herkömmlichen Sulfatverfahren zur Herstellung von Titandioxid zunächst das titanhaltige Erz, z.B. Ilmenit oder Titanschlacke, gemahlen und dann mit Schwefelsäure gemischt. Die Aufschlussreaktion kann dabei auf zweierlei Weise erfolgen: Entweder wird das titanhaltige Erz (Ilmenit oder Titanschlacke) mit einer Schwefelsäure einer Konzentration von ca. 65 bis 80 Gew.% gemischt und die Aufschlussreaktion durch Zugabe von rauchender Schwefelsäure (Oleum) und die damit verbundene Reaktionswärme gestartet, oder es wird das titanhaltige Erz mit einer Schwefelsäure einer Konzentration von ca. 86-96 Gew.% gemischt und die. Aufschlussreaktion durch Zugabe von Wasser oder verdünnter Schwefelsäure und die damit verbundene Reaktionswärme gestartet.

Vor dem Start der Aufschlussreaktion mit rauchender Schwefelsäure bzw. Wasser wird die Mischung in der Regel auf eine Temperatur von ungefähr 50°C bis 80°C erhitzt. Nach der Zugabe von Oleum bzw. Wasser und der daraus initiierten exothermen Reaktion steigt die Temperatur der Mischung schnell auf ungefähr 180-200°C an.

Während der anschließenden Reifung der Reaktionsmischung fällt die Temperatur langsam auf ungefähr 150°C. Hiernach wird die Reaktionsmischung in Form eines festen Aufschlusskuchens in verdünnter Schwefelsäure und/oder Wasser gelöst und die verbleibenden Feststoffe mittels Sedimentation und/oder Filtration abgetrennt. Die filtrierte Flüssigkeit, die sogenannte Schwarzlösung, wird dann für die Gewinnung von Titandioxid weiterverarbeitet.

Da die abgetrennten Feststoffe, d.h. der Aufschlussrückstand, üblicherweise noch ungefähr 40 bis 60 Gew.% Titandioxid (bezogen auf die gesamten Feststoffe) enthalten, sind verschiedene Techniken vorgeschlagen worden, um aus dem Aufschlussrückstand weiteres Titandioxid zu gewinnen und die Menge an Material, die anderweitig verwendet oder deponiert werden muss, zu vermindern.

So beschreibt DE 2 951 749 ein Verfahren zum erneuten Aufschluss des bei der Titandioxid-Herstellung anfallenden Aufschlussrückstandes. Dabei wird der in herkömmlicher Weise anfallende Aufschlussrückstand zu einer Mischung aus Schlacke und konzentrierter Schwefelsäure gegeben, wodurch eine exotherme Reaktion in Gang gesetzt wird. Anschließend wird das Reaktionsprodukt in herkömmlicher Weise aufgearbeitet. Vorteil dieses Verfahrens ist, dass es autotherm arbeitet. Als problematisch bei diesem Verfahren hat sich jedoch die Handhabung der Produkte herausgestellt: Das Zudosieren des festen Aufschlussrückstandfilterkuchens in die Reaktionsmischung und eine ausreichende Homogenisierung der Reaktionsmasse ist während der unmittelbar anspringenden Reaktion nur unter hohem Aufwand realisierbar und wesentlich schwieriger als die Dosierung einer Flüssigkeit zu einem festen oder Feststoffe enthaltenden Reaktionspartner mit gleichzeitiger Homogenisierung der Mischung. Daneben ist die Vorgehensweise auch mit einer erheblichen Gefährdung durch lokale Reaktionszentren in Folge mangelhafter Durchmischung verbunden. Schließlich verlangt die Zugabe eines Filterkuchens in eine flüssige Reaktionsmischung im Gegensatz zur herkömmlichen Zugabe einer Flüssigkeit in eine flüssige Reaktionsmischung eine erstens zusätzliche und zweitens aufwendigere Verfahrenstechnik. Diese Nachteile haben verhindert, dass das Verfahren gemäß DE 2 951 749 industriell zur Anwendung kommt.

Ausgehend von diesem Stand der Technik sind daher weitere Versuche unternommen worden, effiziente Verfahren zum Aufschluss des bei der Titandioxid-Herstellung anfallenden Aufschlussrückstandes bereitzustellen.

DE 4 027 105 beschreibt ein Verfahren, gemäß dem der Aufschlussrückstand mit Schwefelsäure gemischt wird, auf eine Temperatur von 120°C bis 350°C erhitzt und bei dieser Temperatur über einen relativ langen Zeitraum gehalten wird. Die Notwendigkeit, die Reaktionsmischung auf diesen relativ hohen Temperaturen über einen relativ langen Zeitraum zu erhitzen, erfordert jedoch eine hohe Energiezufuhr und ist daher wirtschaftlich nicht annehmbar. Außerdem ist für diese Variante eine gänzlich andere Verfahrenstechnik im Vergleich zum herkömmlichen Verfahren notwendig.

DE 4 434 315 offenbart ein Verfahren, bei dem der Aufschlussrückstand mit Schwefelsäure so gewaschen wird, dass die Schwefelsäurekonzentration in der flüssigen Phase des Filterkuchens ungefähr 35 % beträgt. Dieser Filterkuchen wird auf eine Temperatur von 170°C erhitzt und bei dieser Temperatur gehalten, bis eine leicht exotherme Reaktion auftritt. Der Nachteil dieses Verfahrens ist zum einen das Erfordernis des Waschens des Filterkuchens mit Schwefelsäure. Diese Vorgehensweise nimmt Zeit und Filterpressenkapazität in Anspruch und führt zudem zu Filtratabfällen, die entsorgt werden müssen. Zudem muss der Filterkuchen erhitzt werden, was aufwendig und nicht wirtschaftlich ist. Außerdem ist für diese Variante eine gänzlich andere Verfahrenstechnik im Vergleich zum herkömmlichen Verfahren notwendig.

Vor diesem Hintergrund war es das erfindungsgemäße Ziel, Verfahren zur Gewinnung von Titandioxid aus Aufschlussrückständen eines Sulfatverfahrens zur Herstellung von Titandioxid bereitzustellen, die nicht mit den obigen Problemen des Standes der Technik behaftet sind.

Dieses Ziel wird erfindungsgemäß gelöst durch Bereitstellung zweier Verfahren zur Gewinnung von Titandioxid aus Aufschlussrückständen eines Sulfatverfahrens zur Herstellung von Titandioxid, wobei das erste erfindungsgemäße Verfahren die Schritte umfasst:
(a) Mischen der TiO₂-haltigen Ausgangsmaterialien in der Weise, daß 60 bis 100 Gew.% des eingesetzten TiO₂ in Form von Aufschlussrückstand und 0 bis 40 Gew.% des eingesetzten TiO₂ in Form von herkömmlich verwendeten Rohstoffen mit Schwefelsäure gemischt werden, wobei eine Aufschlämmung mit einem Schwefelsäuregehalt von 50 bis 85 Gew.% gebildet wird;
(b) Erwärmen der Reaktionsmischung auf eine Temperatur von 60°C bis 150°C und anschließend Zugabe von rauchender Schwefelsäure zum Start der Aufschlussreaktion;
(c) Lösen des erhaltenen Reaktionsproduktes;
(d) Abtrennen der nicht gelösten Feststoffe von der flüssigen Phase;
(e) Gewinnung von Titandioxid aus der flüssigen Phase.

Das zweite erfindungsgemäße Verfahren umfasst die Schritte:
(a') Mischen der TiO₂-haltigen Ausgangsmaterialien in der Weise, daß 60 bis 100 Gew.% des eingesetzten TiO₂ in Form eines getrockneten TiO₂-haltigen Aufschlussrückstandes und 0 bis 40 Gew.% des eingesetzten TiO₂ in Form von herkömmlich verwendeten Rohstoffen mit Schwefelsäure gemischt werden, wobei eine Aufschlämmung mit einem Schwefelsäuregehalt in der Flüssigphase von mindestens 86 Gew.% gebildet wird
(b') Erwärmen der Reaktionsmischung auf eine Temperatur von 60°C bis 150°C und anschließend Zugabe von Wasser oder verdünnter Schwefelsäure zum Start der Aufschlussreaktion;
(c') Lösen des erhaltenen Reaktionsproduktes; (d') Abtrennen der nicht gelösten Feststoffe von der flüssigen Phase;
(e') Gewinnung von Titandioxid aus der flüssigen Phase.

Die erfindungsgemäßen Verfahren beruhen auf der überraschenden Erkenntnis, dass bei Wahl spezifischer Reaktionsbedingungen Titandioxid aus dem Aufschlussrückstand auch dann in einer exothermen und damit wirtschaftlichen Reaktion gewonnen werden kann, wenn der überwiegende oder sogar gesamte Teil des aufzuschließenden TiO₂ in Form von Aufschlussrückstand vorliegt. Als besonders vorteilhaft haben sich die erfindungsgemäßen Verfahren im Hinblick auf die industrielle Anwendung erwiesen, da die erfindungsgemäßen Verfahrensabläufe mit dem herkömmlichen Verfahrensablauf des Sulfatverfahrens zur Gewinnung von Titandioxid aus titanhaltigem Erz weitgehend übereinstimmen, so dass die Anlagen und Reaktoren des Sulfatverfahrens auch für das sich daran anschließende erfindungsgemäße verfahren verwendet werden können.

Die TiO₂-haltigen Ausgangsmaterialien enthalten 60 bis 100 Gew.%, vorzugsweise 80 bis 100 Gew.%, am bevorzugtesten 100 Gew.% Aufschlussrückstand. Der Rest des eingesetzten TiO₂-haltigen Ausgangsmaterials besteht aus den herkömmlich verwendeten Rohstoffen wie Ilmenit und/oder Titanschlacke. Ein möglichst hoher Mengenanteil an Aufschlussrückstand in der Reaktionsmischung ist u.a. deshalb vorteilhaft, weil bei geringerem Mengenanteil die Logistik des Gesamtprozesses erheblich komplizierter wird und bei der endgültigen Ausschleusung des zweifach aufgeschlossenen Aufschlussrückstands zwangsläufig ein zu hoher Anteil von erst einmal aufgeschlossenem Material (aus den herkömmlichen Titandioxidrohstoffen) ebenfalls ausgeschleust wird.

Die in dem ersten erfindungsgemäßen Verfahren zu verwendenden Ausgangsstoffe sowie die einzelnen Verfahrensschritte des ersten erfindungsgemäßen Verfahrens werden im folgenden beschrieben.

Der erfindungsgemäß verwendete Aufschlussrückstand ist ein Aufschlussrückstand, wie er durch ein Sulfatverfahren zur Herstellung von Titandioxid erhalten wird.

Als Aufschlussrückstand wird in der Regel der Aufschlussrückstandfilterkuchen verwendet. Alternativ kann aber auch die bei der mittels Eindickern vorgenommenen Abtrennung des Aufschlussrückstandes von der Schwarzlösung anfallende feststoffreiche Fraktion (Unterlauf des Eindickers) ganz oder teilweise an die Stelle des Aufschlussrückstandfilterkuchens treten und auf diese Weise wiederverwertet werden.

Der erfindungsgemäß verwendete Aufschlussrückstand kann z.B. vor Zuführung zu dem erfindungsgemäßen Verfahren zur Abdeckung von gelagertem Erz verwendet werden, wodurch Verwehungen des Erzes durch Wind verhindert werden. Der Aufschlussrückstand kann dann zusammen mit dem abgedeckten Erz dem erfindungsgemäßen Verfahren zugeführt werden.

Dieser Aufschlussrückstand wird vorzugsweise vor dem Zuführen zum erfindungsgemäßen Verfahren vorbehandelt, um den Anteil an Wasser zu verringern. Diese Vorbehandlung kann gegebenenfalls notwendig sein, um Konzentrationsverhältnisse im Reaktor herbeizuführen, welche einen exothermen und raschen Reaktionsverlauf bei der Aufschlussreaktion ermöglichen und gleichzeitig eine gute Qualität der auf diese Weise erhaltenen Schwarzlösung gewährleisten.

Vorzugsweise wird der Aufschlussrückstand für das erste erfindungsgemäße Verfahren z.B. mit einer Filterpresse so entfeuchtet, dass er einen Feststoffgehalt von über 65 Gew.% aufweist. Vor dem Zuführen in das erfindungsgemäße Verfahren wird der aus dem Sulfatverfahren erhaltene Filterkuchen zunächst vorzugsweise kleingeschnitten oder anderweitig zu kleineren Stücken verarbeitet. Weiterhin ist es bevorzugt, den Aufschlussrückstand vor dem erfindungsgemäßen Verfahren mit Schwefelsäure, vorzugsweise mit einer Konzentration von über 50 Gew.%, zu waschen und/oder in einer solchen Schwefelsäure aufzuschlämmen. Anschließend kann die Aufschlämmung wiederum filtriert werden.

Der vorbehandelte und dem erfindungsgemäßen Verfahren zuzuführende Aufschlussrückstand weist in seiner Flüssigphase bevorzugt einen Schwefelsäuregehalt von über 35 Gew.%, vorzugsweise von über 50 Gew.%, auf. Es wird besonders bevorzugt, dass der als Ausgangsmaterial verwendete Aufschlussrückstand mit einer Filterpresse zunächst so vorbehandelt wird, dass er einen Feststoffgehalt von über 65 Gew.%, bezogen auf das Gesamtgewicht des Aufschlussrückstandes, aufweist, anschließend mit Schwefelsäure einer Konzentration von über 50 Gew. % gewaschen und in einer Schwefelsäure einer Konzentration von über 50 Gew.% wieder aufgeschlämmt wird, und dann nochmals mit einer Filterpresse filtriert wird.

Der erfindungsgemäß verwendete Aufschlussrückstand, wie er durch ein Sulfatverfahren zur Herstellung von Titandioxid erhalten wird, kann vor der Zuführung zum ersten erfindungsgemäßen Verfahren aber auch getrocknet werden. Die Trocknung des Aufschlussrückstands kann dabei mittels konventioneller, dem Fachmann geläufiger Techniken erfolgen. Bevorzugt wird eine Mahltrocknung zur zusätzlichen Erhöhung der Reaktivität. Auch ist es möglich, vor dem Verfahrensschritt der Mahltrocknung den Aufschlussrückstand zunächst zu neutralisieren und zu waschen.

Die zum Aufschlämmen verwendete Schwefelsäure kann eine wiederverwertete Schwefelsäure mittlerer Konzentration (vorzugsweise 60-80 Gew.%) sein, die Metallsulfate enthält, wie sie nach Aufkonzentrierung der Dünnsäure aus dem herkömmlichen Sulfatverfahren zur Herstellung von Titandioxid erhalten wird.

Bei dem Mischen des Aufschlussrückstandes mit Schwefelsäure kann weiterhin titanhaltiges Erz, vorzugsweise Ilmenit, und/oder Titanschlacke hinzugefügt werden. Die Mengenanteile der TiO₂-haltigen Ausgangsmaterialien ergeben sich in der Weise, dass 60 bis 100 Gew.% des eingesetzten TiO₂ in Form von Aufschlussrückstand und 0 bis 40 Gew.% des eingesetzten TiO₂ in Form von herkömmlich verwendeten Rohstoffen eingebracht werden. Bevorzugt werden 80 bis 100 Gew.% des eingesetzten TiO₂ in Form von Aufschlussrückstand und 0 bis 20 Gew.% des eingesetzten TiO₂ in Form von herkömmlich verwendeten Rohstoffen eingebracht.

In dem erfindungsgemäßen Verfahrensschritt (a) wird Schwefelsäure mit dem Aufschlussrückstand, wahlweise zusätzlich mit dem titanhaltigen Erz, derart vermischt, dass der Schwefelsäuregehalt der Aufschlämmung vor Zugabe der rauchenden Schwefelsäure 50 bis 85 Gew.%, vorzugsweise 60 bis 80 Gew.% beträgt.

Vor der Zugabe der rauchenden Schwefelsäure wird die Aufschlämmung auf eine Temperatur von 60 bis 150 °C, vorzugsweise 85 bis 115 °C, am bevorzugtesten 100 bis 1.15 °C, gebracht. Die Temperatur wird so gewählt, dass sie ausreichend ist für die Initiierung der anschliessenden Aufschlussreaktion, aber gleichzeitig nicht so hoch ist, dass diese Reaktion vor Zugabe der rauchenden Schwefelsäure bereits schleichend beginnt. Die Temperaturerhöhung erfolgt bevorzugt durch direktes Einleiten von Dampf in die Reaktionsmischung.

Weiterhin wird vor der Zugabe der rauchenden Schwefelsäure durch die Mischung vorzugsweise Luft geblasen, um die Mischung möglichst gut zu homogenisieren.

Durch Zugabe rauchender Schwefelsäure wird die Aufschlussreaktion der Aufschlämmung in Schritt (b) in Gang gesetzt. Die rauchende Schwefelsäure (Oleum; Schwefelsäure mit einem rechnerischen Gehalt von ca. 106 Gew.% an H₂SO₄) wird hierbei in möglichst kurzer Zeit zu der Aufschlämmung hinzugegeben.

Nach Zugabe der rauchenden Schwefelsäure beträgt der Schwefelsäuregehalt der Flüssigphase der Aufschlämmung vorzugsweise 80 bis 95 Gew.%, besonders bevorzugt 82 bis 90 Gew.%. Die Menge an rauchender Schwefelsäure, die zugegeben wird, sollte vorzugsweise so gewählt werden, dass die Temperatur der Aufschlämmung in Folge der anspringenden Reaktion auf mindestens 180°C, besonders bevorzugt mindestens 200°C ansteigt. Vorzugsweise ist mit der Zugabe der rauchenden Schwefelsäure ein Temperaturanstieg von mindestens 20°C, besonders bevorzugt mindestens 40°C verbunden. Das Gewichtsverhältnis H₂SO₄/TiO₂ beträgt dann vorzugsweise 1,5 bis 3,5, besonders bevorzugt 2,0 bis 2,9.

Nach Zugabe der rauchenden Schwefelsäure zu der Aufschlämmung des Aufschlussrückstandes wird die flüssige Reaktionsmischung zunächst noch vorzugsweise durch Einleiten von Luft durchmischt und nach dem Festwerden zur Reifung über einen solchen Zeitraum stehen gelassen, dass vorzugsweise mindestens 50 Gew.%, besonders bevorzugt mindestens 70 Gew.% des titanhaltigen Materials aufgeschlossen werden. Der Zeitraum beträgt in der Regel 2 bis 12 Stunden. Während dieses Zeitraums kühlt sich die Reaktionsmischung vorzugsweise langsam auf eine Temperatur von ca. 140-190°C ab.

Die darauffolgenden Schritte (c) bis (e) entsprechen den jeweiligen Schritten des Sulfatverfahrens und sind dem Fachmann geläufig.

In Schritt (c) wird das in Schritt (b) erhaltene Reaktionsprodukt, d.h. der Aufschlusskuchen, in vorzugsweise Wasser oder verdünnter wässriger Säure, besonders bevorzugt verdünnter Schwefelsäure, gelöst. Hierbei sollte darauf geachtet werden, dass die Temperatur 85°C nicht überschreitet, um eine vorzeitige Hydrolyse zu vermeiden. Zur besseren Durchmischung kann Luft in die Mischung eingeblasen werden. Es kann von Vorteil sein, während des Lösens reduzierende Bedingungen durch Zugabe von metallischem Eisen einzustellen.

Hiernach werden in Schritt (d) die Feststoffe möglichst vollständig abgetrennt. Dies erfolgt üblicherweise durch Sedimentation und/oder Filtration.

Aus der so abgetrennten, möglichst klaren Lösung wird dann in Schritt (e) das Titandioxid gewonnen, und zwar vorzugsweise durch Hydrolyse. Das so erhaltene Titandioxid-Rohprodukt kann dann in herkömmlichen Verfahren weiterverarbeitet werden.

Das zweite erfindungsgemäße Verfahren funktioniert analog zu der zuvor ausführlich beschriebenen ersten Variante, jedoch mit dem Unterschied, daß die Reaktion durch Zugabe von Wasser oder verdünnter Schwefelsäure gestartet wird.

Der erfindungsgemäß verwendete Aufschlussrückstand ist wiederum ein Aufschlussrückstand, wie er durch ein Sulfatverfahren zur Herstellung von Titandioxid erhalten wird. Dieser Aufschlussrückstand wird vor dem Zuführen zum erfindungsgemäßen Verfahren vorzugsweise vorbehandelt, indem er getrocknet wird. Die Trocknung des Aufschlussrückstands kann mittels konventioneller, dem Fachmann geläufiger Techniken erfolgen. Bevorzugt wird eine Mahltrocknung zur Erhöhung der Reaktivität. Auch ist es möglich, vor dem Verfahrensschritt der Mahltrocknung den Aufschlussrückstand zunächst zu neutralisieren und zu waschen. Das TiO₂-haltige Ausgangsmaterial besteht zu 60 bis 100 Gew.% aus Aufschlussrückstand und zu 0 bis 40 Gew.% aus herkömmlich verwendeten Rohstoffen wie Ilmenit und/oder Titanschlacke. Bevorzugt wird 80 bis 100 Gew.% des eingesetzten TiO₂-haltigen Ausgangsmaterials in Form von Aufschlussrückstand und 0 bis 20 Gew.% des eingesetzten TiO₂ in Form von herkömmlich verwendeten Rohstoffen verwendet. Besonders bevorzugt besteht 100 Gew.% des eingesetzten TiO₂-haltigen Ausgangsmaterials aus Aufschlussrückstand.

Die Schwefelsäure wird mit dem Aufschlussrückstand, wahlweise zusätzlich mit dem titanhaltigen Erz, derart vermischt, dass der Schwefelsäuregehalt der Aufschlämmung vor Zugabe des Wasser bzw. der verdünnten Schwefelsäure mindestens 86 Gew.%, vorzugsweise mindestens 90 Gew.% beträgt.

Vor der Zugabe des Wasser bzw. der verdünnten Schwefelsäure wird die Aufschlämmung auf eine Temperatur von vorzugsweise 60 bis 150 °C, besonders bevorzugt 85 bis 115 °C, am bevorzugtesten 100 bis 115 °C, gebracht. Die Temperatur wird so gewählt, dass sie ausreichend ist für die Initiierung der anschliessenden Aufschlussreaktion, aber gleichzeitig nicht so hoch ist, dass diese Reaktion vor Zugabe des Wasser bzw. der verdünnten Schwefelsäure bereits schleichend beginnt. Die Temperaturerhöhung erfolgt bevorzugt durch direktes Einleiten von Dampf in die Reaktionsmischung.

Weiterhin wird vor der Zugabe des Wasser bzw. der verdünnten Schwefelsäure durch die Mischung vorzugsweise Luft geblasen, um die Mischung möglichst gut zu homogenisieren.

Durch Zugabe des Wasser bzw. der verdünnten Schwefelsäure wird die Aufschlussreaktion der Aufschlämmung in Schritt (b') in Gang gesetzt.

Nach Zugabe des Wasser bzw. der verdünnten Schwefelsäure beträgt der Schwefelsäuregehalt der Flüssigphase der Aufschlämmung vorzugsweise 80 bis 95 Gew.%, besonders bevorzugt 82 bis 90 Gew.%. Die Menge an Wasser bzw. verdünnter Schwefelsäure, die zugegeben wird, sollte vorzugsweise so gewählt werden, dass die Temperatur der Aufschlämmung in Folge der anspringenden Reaktion auf mindestens 180°C, besonders bevorzugt mindestens 200°C ansteigt. Vorzugsweise ist mit der Zugabe des Wassers bzw. der verdünnten Schwefelsäure ein Temperaturanstieg von mindestens 20°C, besonders bevorzugt mindestens 40°C verbunden. Das Gewichtsverhältnis H₂SO₄/TiO₂ beträgt dann vorzugsweise 1,5 bis 3,5, besonders bevorzugt 2,0 bis 2,9.

Die darauffolgenden Schritte (c') bis (e') entsprechen den Schritten (c) bis (e) des ersten erfindungsgemäßen Verfahrens.

Die Erfindung wird nun anhand von Beispielen näher erläutert werden.

### Beispiel 1

600 g eines Aufschlussrückstandfilterkuchens mit einem TiO₂-Gehalt von 35 Gew.% aus der Rückstandsabtrennung eines herkömmlichen TiO₂-Aufschlusses, entsprechend 70% des insgesamt eingesetzten TiO₂, und 167, 6 g eines gemahlenen Ilmenits mit einem TiO₂-Gehalt von 53,7 Gew.%, entsprechend 30% des insgesamt eingesetzten TiO₂, werden mit 150 g einer 96%igen Schwefelsäure und 130 g einer salzhaltigen 60%igen Schwefelsäure aus der Schwefelsäurerückgewinnung intensiv gemischt.

Diese Mischung wird auf 100°C aufgeheizt und unter Durchblasen von 500 1 Luft pro Stunde innerhalb einer Minute mit 689,4 g Oleum mit einem rechnerischen Schwefelsäuregehalt von 106,1% (entspricht 597,2 g SO₃) versetzt und gut gemischt. Die flüssige Phase der Reaktionsmischung hat einen Schwefelsäuregehalt von 90%. Die Reaktion verläuft exotherm. Nach 5 Minuten erreicht die Reaktionsmischung ihre maximale Temperatur von 201°C. Danach wird für eine Reifezeit von 5 Stunden bei einer Temperatur von 180°C gehalten. Während der Reifezeit wird die Mischung nach 2,5 Stunden fest.
Die Reaktionsmischung wird zerkleinert und mit verdünnter Schwefelsäure bei 60°C gelöst.
Nach Abtrennung des Feststoffes durch Filtration wird der Titandioxidgehalt in der Lösung und im Rückstand bestimmt. Hieraus errechnet sich ein TiO₂-Aufschlußgrad von 77,5 Gew.%. Der gewaschene und getrocknete Rückstand enthält 29,14 Gew.% TiO₂. Bei Annahme von 90,0 % Ausbeute des Ilmenits ergibt sich eine TiO₂-Ausbeute aus dem eingesetzten Aufschlusstückstand von 72,2%. Das Filtrat wird nach bekannten Methoden zum TiO₂ weiterverarbeitet.

### Beispiel 2

31,31 t eines Aufschlussrückstandfilterkuchens mit einem TiO₂-Gehalt von 36,8 Gew.% aus der Rückstandsabtrennung eines herkömmlichen TiO₂-Aufschlusses, entsprechend 80% des insgesamt eingesetzten TiO₂, und 3,68 t einer gemahlenen Schlacke mit einem TiO₂-Gehalt von 78,2 Gew.%, entsprechend 20% des insgesamt eingesetzten TiO₂, werden mit 9,90 t einer 96%igen Schwefelsäure und 1,18 t einer salzhaltigen 76,3%igen Schwefelsäure aus der Schwefelsäurerückgewinnung in einem herkömmlichen großtechnischen TiO₂-Aufschlussreaktor intensiv gemischt.
Diese Mischung wird auf 105°C aufgeheizt und unter Durchblasen von 500 m³ Luft pro Stunde innerhalb von 9 Minuten mit 19,04 t Oleum mit einem rechnerischen Schwefelsäuregehalt von 106,2% (entspricht 16,51 t SO₃) versetzt und gut gemischt. Die flüssige Phase der Reaktionsmischung hat einen Schwefelsäuregehalt von 83%. Die Reaktion verläuft exotherm. Nach 38 Minuten erreicht die Reaktionsmischung ihre maximale Temperatur von 198°C. Danach wird für eine Zeit von 5 Stunden gereift; die Temperatur fällt dabei auf ca. 160°C ab.
Die Reaktionsmischung wird mit 16,2 m³ 7%iger Schwefelsäure und 24,6 m³ Wasser gelöst. Zur Reduktion wurden während des Lösens 0,51 t Feineisen kontinuierlich zugegeben.
Nach Abtrennung des Feststoffes durch Filtration wird der Titandioxidgehalt in der Lösung und im Rückstand bestimmt. Hieraus errechnet sich ein TiO₂-Aufschlußgrad von 72,9 Gew.%. Der gewaschene und getrocknete Rückstand enthält 43,15 Gew.% TiO₂. Bei Annahme von 95,0 % Ausbeute der Schlacke ergibt sich eine TiO₂-Ausbeute aus dem eingesetzten Aufschlusstückstand von 64,8%. Das Filtrat wird nach bekannten Methoden zum TiO₂ weiterverarbeitet.

### Beispiel 3

32,71 t eines mit 96%iger Schwefelsäure gewaschenen Aufschlussrückstandfilterkuchens mit einem TiO₂-Gehalt von 35,3 Gew.% aus der Rückstandsabtrennung eines herkömmlichen TiO₂-Aufschlusses, entsprechend 80% des insgesamt eingesetzten TiO₂, und 3,70 t einer gemahlenen Schlacke mit einem TiO₂-Gehalt von 78,2 Gew.%, entsprechend 20% des insgesamt eingesetzten TiO₂, werden mit 9,5 t einer 96%igen Schwefelsäure und 1,36 t einer salzhaltigen 76,3%igen Schwefelsäure aus der Schwefelsäurerückgewinnung in einem herkömmlichen großtechnischen TiO₂-Aufschlussreaktor intensiv gemischt.
Diese Mischung wird auf 115°C aufgeheizt und unter Durchblasen von 500 m³ Luft pro Stunde innerhalb von 10 Minuten mit 18,36 t Oleum mit einem rechnerischen Schwefelsäuregehalt von 106,2% (entspricht 115,92 t SO₃) versetzt und gut gemischt. Die flüssige Phase der Reaktionsmischung hat einen Schwefelsäuregehalt von 81,5%. Die Reaktion verläuft exotherm. Nach 25 Minuten erreicht die Reaktionsmischung ihre maximale Temperatur von 201°C. Danach wird für eine Reifezeit von 3 Stunden bei einer Temperatur von 186°C gehalten.
Die Reaktionsmischung wird mit 15,0 m³ 7%iger Schwefelsäure und 27,1 m³ Wasser gelöst. Zur Reduktion wurden zu Beginn des Lösens 0,10 t Feineisen zugegeben.
Nach Abtrennung des Feststoffes durch Filtration wird der Titandioxidgehalt in der Lösung und im Rückstand bestimmt. Hieraus errechnet sich ein TiO₂-Aufschlußgrad von 71,3 Gew.%. Der gewaschene und getrocknete Rückstand enthält 42,86 Gew.% TiO₂. Bei Annahme von 95,0% Ausbeute der Schlacke ergibt sich eine TiO₂-Ausbeute aus dem eingesetzten Aufschlusstückstand von 66,9%. Das Filtrat wird nach bekannten Methoden zum TiO₂ weiterverarbeitet.

### Beispiel 4

480 g eines gewaschenen und mahlgetrockneten Aufschlussrückstandes mit einem TiO₂-Gehalt von 62,95 Gew.% werden mit 442,1 g einer 75,9%igen Schwefelsäure aus der Schwefelsäurerückgewinnung angerührt. Diese Mischung wird auf 110°C aufgeheizt und unter Durchblasen von 500 1 Luft pro Stunde innerhalb einer Minute mit 295,5 g Oleum mit einem rechnerischen Schwefelsäuregehalt von 106,1% (entspricht 256,0 g SO₃) versetzt und mittels Lufteinleitung intensiv gemischt. Die flüssige Phase der Reaktionsmischung hat einen Schwefelsäuregehalt von 88%. Die Reaktion verläuft exotherm. Nach 32 Minuten und bei einer Temperatur von 193°C wird die Reaktionsmischung fest und erreicht nach 42 Minuten ihre maximale Temperatur von 199°C. Danach wird die Mischung für eine Reifezeit von 5 Stunden auf 180°C gehalten.
Die Reaktionsmischung wird zerkleinert und mit verdünnter Schwefelsäure bei 60°C gelöst.

Nach Abtrennung des Feststoffes durch Filtration wird der Titandioxidgehalt in der Lösung und im Rückstand bestimmt. Hieraus errechnet sich ein TiO₂-Aufschlußgrad aus dem eingesetzten Aufschlusstückstand von 81,3 Gew.%. Der gewaschene und getrocknete Rückstand enthält 31,7 Gew.% TiO₂. Das Filtrat wird nach bekannten Methoden zum TiO₂ weiterverarbeitet.

### Beispiel 5 (Vergleichsbeispiel)

591,7 g reiner Ilmenit mit einem TiO₂-Gehalt von 50,5 Gew.% wird mit 745,0 g einer 76,0%igen Schwefelsäure angerührt. Diese Mischung wird auf 70°C aufgeheizt und unter Durchblasen von 500 1 Luft pro Stunde innerhalb einer Minute mit 370,7 g Oleum mit einem rechnerischen Schwefelsäuregehalt von 106,1% (entspricht 321,1 g SO₃) versetzt und gut gemischt. Die flüssige Phase der Reaktionsmischung hat einen Schwefelsäuregehalt von 86%. Die Reaktion verläuft exotherm. Nach 9 Minuten erreicht die Reaktionsmischung ihre maximale Temperatur von 187°C und wird nach 12 Minuten bei einer Temperatur von 179°C fest. Danach wird für eine Reifezeit von 3 Stunden bei 160°C gehalten.
Die Reaktionsmischung wird zerkleinert und mit verdünnter Schwefelsäure bei 60°C gelöst. Zur Reduktion wird 10 g Feineisen zugegeben.
Nach Abtrennung des Feststoffes durch Filtration wird der Titandioxidgehalt in der Lösung und im Rückstand bestimmt. Hieraus errechnet sich ein TiO₂-Aufschlußgrad von 91,2 Gew.%. Der gewaschene und getrocknete Rückstand enthält 57,05 Gew.% TiO₂. Das Filtrat wird nach bekannten Methoden zum TiO₂ weiterverarbeitet;

### Beispiel 6 (Vergleichsbeispiel)

379,3 g reine Schlacke mit einem TiO₂-Gehalt von 79,1 Gew.% wird mit 373,2 g einer 70,0%igen Schwefelsäure angerührt. Diese Mischung wird auf 80°C aufgeheizt und unter Durchblasen von 500 1 Luft pro Stunde innerhalb einer Minute mit 371,2 g Oleum mit einem rechnerischen Schwefelsäuregehalt von 106,1% (entspricht 321,6 g SO₃) versetzt und gut gemischt. Die flüssige Phase der Reaktionsmischung hat einen Schwefelsäuregehalt von 88%. Die Reaktion verläuft exotherm. Nach 12 Minuten und bei einer Temperatur von 152°C wird die Reaktionsmischung fest und erreicht nach 27 Minuten ihre maximale Temperatur von 184°C. Danach wird für eine Reifezeit von 5 Stunden bei 180°C gehalten.
Die Reaktionsmischung wird zerkleinert und mit verdünnter Schwefelsäure bei 60°C gelöst.
Nach Abtrennung des Feststoffes durch Filtration wird der Titandioxidgehalt in der Lösung und im Rückstand bestimmt. Der gewaschene und getrocknete Rückstand enthält 51,62 Gew.% TiO₂. Hieraus errechnet sich ein TiO₂-Aufschlußgrad von 93,7 Gew.%. Das Filtrat wird nach bekannten Methoden zum TiO₂ weiterverarbeitet.

## Patentansprüche

1. Verfahren zur Gewinnung von Titandioxid aus Aufschlussrückständen des herkömmlichen Sulfatverfahrens zur Herstellung von Titandioxid, umfassend die Schritte:
(a) Mischen der TiO₂-haltigen Ausgangsmaterialien in der Weise, daß 60 bis 100 Gew.% des eingesetzten TiO₂ in Form von Aufschlussrückstand und 0 bis 40 Gew.% des eingesetzten TiO₂ in Form von herkömmlich verwendeten Rohstoffen mit Schwefelsäure gemischt werden, wobei eine Aufschlämmung mit einem Schwefelsäuregehalt in der Flüssigphase von 50 bis 85 Gew.% gebildet wird;
(b) Erwärmen der Reaktionsmischung auf eine Temperatur von 60°C bis 150°C und anschließend Zugabe von rauchender Schwefelsäure zum Start der Aufschlussreaktion;
(c) Lösen des erhaltenen Reaktionsproduktes;
(d) Abtrennen der nicht gelösten Feststoffe von der flüssigen Phase;
(e) Gewinnung von Titandioxid aus der flüssigen Phase.

2. Verfahren zur Gewinnung von Titandioxid aus Aufschlussrückständen eines Sulfatverfahrens zur Herstellung von Titandioxid, umfassend die Schritte:
(a') Mischen der TiO₂-haltigen Ausgangsmaterialien in der Weise, daß 60 bis 100 Gew.% des eingesetzten TiO₂ in Form eines getrockneten TiO₂-haltigen Aufschlussrückstandes und 0 bis 40 Gew.% des eingesetzten TiO₂ in Form von herkömmlich verwendeten Rohstoffen mit Schwefelsäure gemischt werden, wobei eine Aufschlämmung mit einem Schwefelsäuregehalt in der Flüssigphase von mindestens 86 Gew.% gebildet wird
(b') Erwärmen der Reaktionsmischung auf eine Temperatur von 60°C bis 150°C und anschließend Zugabe von Wasser oder verdünnter Schwefelsäure zum Start der Aufschlussreaktion;
(c') Lösen des erhaltenen Reaktionsproduktes ;
(d') Abtrennen der nicht gelösten Feststoffe von der flüssigen Phase;
(e') Gewinnung von Titandioxid aus der flüssigen Phase.

3. Verfahren nach einem der vorhergehenden Ansprüche, wobei von den TiO₂-haltigen Ausgangsmaterialien 80 bis 100% des eingesetzten TiO₂ in Form von Aufschlussrückstand und 0 bis 20% des eingesetzten TiO₂ in Form von herkömmlich verwendeten Rohstoffen verwendet werden.

4. Verfahren nach Anspruch 3, wobei als TiO₂-haltiges Ausgangsmaterial zu 100% Aufschlussrückstand verwendet wird.

5. Verfahren nach Anspruch 1, wobei durch Mischen des Aufschlussrückstandes mit Schwefelsäure vor Zugabe der rauchenden Schwefelsäure eine Aufschlämmung mit einem Schwefelsäuregehalt in der Flüssigphase von 60 bis 80 Gew.% gebildet wird.

6. Verfahren nach Anspruch 1, wobei der als Ausgangsmaterial verwendete Aufschlussrückstand mit einer Filterpresse so vorbehandelt wird, dass er einen Feststoffgehalt von über 65 Gew.%, bezogen auf das Gesamtgewicht des Aufschlussrückstandes, aufweist.

7. Verfahren nach Anspruch 1, wobei der als Ausgangsmaterial verwendete Aufschlussrückstand mit Schwefelsäure einer Konzentration von über 50 Gew.% gewaschen wird.

8. Verfahren nach Anspruch 1, wobei der als Ausgangsmaterial verwendete Aufschlussrückstand so vorbehandelt wird, dass die Flüssigphase einen Schwefelsäuregehalt von über 35 Gew.% aufweist.

9. Verfahren nach Anspruch 8, wobei der als Ausgangsmaterial verwendete Aufschlussrückstand so vorbehandelt wird, dass die Flüssigphase einen Schwefelsäuregehalt von über 50 Gew.% aufweist.

10. Verfahren nach Anspruch 6 und 7, wobei der als Ausgangsmaterial verwendete Aufschlussrückstand mit einer Filterpresse so vorbehandelt wird, dass er einen Feststoffgehalt von über 65 Gew.%, bezogen auf das Gesamtgewicht des Aufschlussrückstandes, aufweist, anschließend mit Schwefelsäure einer Konzentration von über 50 Gew.% gewaschen und in einer Schwefelsäure einer Konzentration von über 50 Gew.% wieder aufgeschlämmt wird, und dann nochmals mit einer Filterpresse filtriert wurde.

11. Verfahren nach Anspruch 2, wobei der Aufschlussrückstand vor der Verwendung für die Aufschlussreaktion einer Mahltrocknung unterzogen wird.

12. Verfahren nach Anspruch 11, wobei der Aufschlussrückstand vor der Mahltrocknung einer Wäsche oder einer Neutralisation mit anschließender Wäsche unterzogen wird.

13. Verfahren nach einem der vorhergehenden Ansprüche, wobei die Reaktionsmischung vor dem Start der Aufschlussreaktion auf eine Temperatur von 80°C bis 115°C erwärmt wird.

14. Verfahren nach einem der vorhergehenden Ansprüche, wobei der Schwefelsäuregehalt der Flüssigphase der Aufschlämmung nach dem Start der Aufschlussreaktion 80 bis 95 Gew.% beträgt.

15. Verfahren nach Anspruch 14, wobei der Schwefelsäuregehalt der Flüssigphase der Aufschlämmung nach dem Start der Aufschlussreaktion 82 bis 90 Gew.% beträgt.

16. Verfahren nach einem der vorhergehenden Ansprüche, wobei die Temperatur der Reaktionsmischung nach dem Start der Aufschlussreaktion auf mindestens 180°C ansteigt.

17. Verfahren nach Anspruch 16, wobei die Temperatur der Reaktionsmischung nach dem Start der Aufschlussreaktion auf mindestens 200°C ansteigt.

18. Verfahren nach einem der vorhergehenden Ansprüche, wobei die Temperaturerhöhung der Reaktionsmischung nach Schritt (b) bzw. (b') infolge der exothermen Reaktion mindestens 20°C, bevorzugt mindestens 40°C beträgt.

19. Verfahren nach einem der vorhergehenden Ansprüche, **dadurch gekennzeichnet, daß** der Aufschlussgrad des mit dem Aufschlussrückstand eingebrachten TiO₂ mindestens 50%, bevorzugt mindestens 70%, beträgt.

20. Verfahren nach einem der vorhergehenden Ansprüche, **dadurch gekennzeichnet, dass** der Aufschlussrückstand vor der Zuführung zu Schritt (a) bzw. (a') zur Abdeckung der üblicherweise zur Titandioxidproduktion verwendeten Rohstoffe, z.B. Ilmenit oder Titanschlacke, verwendet wird, wodurch Verwehungen durch Wind unterbunden werden, und diese Mischung als TiO2-haltiger Rohstoff verwendet wird.

21. Verfahren nach einem der vorhergehenden Ansprüche, **dadurch gekennzeichnet, dass** der feststoffreiche Unterlauf eines zur Klärung der feststoffhaltigen Schwarzlösung verwendeten Eindickers als TiO₂-haltiger Rohstoff verwendet wird.

22. Verfahren nach einem der vorhergehenden Ansprüche, **dadurch gekennzeichnet, dass** das Gewichtsverhältnis H₂SO₄/TiO₂ nach Schritt (b) bzw. (b') 1,5 bis 3,5 beträgt.

## Claims

1. Process for recovering titanium dioxide from digestion residues from the conventional sulphate process for producing titanium dioxide comprising the steps:
(a) mixing the starting materials containing TiO₂ by mixing 60 to 100 % by weight of the TiO₂ employed in the form of digestion residue and 0 to 40 % by weight of the TiO₂ employed in the form of traditionally used raw materials with sulphuric acid, wherein a slurry having a sulphuric acid content in the liquid phase of 50 to 85 % by weight is formed;
(b) heating the reaction mixture to a temperature of 60 °C to 150 °C and then adding fuming sulphuric acid to start the digestion reaction;
(c) dissolving the reaction product obtained;
(d) separating off the undissolved solids from the liquid phase;
(e) recovery of titanium dioxide from the liquid phase.

2. Process for recovering titanium dioxide from digestion residues from a sulphate process for producing titanium dioxide comprising the steps:
(a') mixing the starting materials containing TiO₂ by mixing 60 to 100 % by weight of the TiO₂ employed in the form of a dried digestion residue containing TiO₂ and 0 to 40 % by weight of the TiO₂ employed in the form of traditionally used raw materials with sulphuric acid, wherein a slurry having a sulphuric acid content in the liquid phase of at least 86 % by weight is formed;
(b') heating the reaction mixture to a temperature of 60 °C to 150 °C and then adding water or dilute sulphuric acid to start the digestion reaction;
(c') dissolving the reaction product obtained;
(d') separating off the undissolved solids from the liquid phase;
(e') recovery of titanium dioxide from the liquid phase.

3. Process according to any of the preceding claims, wherein of the starting materials containing TiO₂ 80 to 100 % of the TiO₂ employed are used in the form of digestion residue and 0 to 20 % of the TiO₂ employed in the form of traditionally used raw materials.

4. Process according to claim 3, wherein digestion residue is used to 100 % as the starting material containing TiO₂.

5. Process according to claim 1, wherein by mixing the digestion residue with sulphuric acid prior to the addition of the fuming sulphuric acid a slurry having a sulphuric acid content in the liquid phase of 60 to 80 % by weight is formed.

6. Process according to claim 1, wherein the digestion residue used as starting material is pretreated by means of a filter press in such a way that it has a solids content of over 65 % by weight with respect to the total weight of the digestion residue.

7. Process according to claim 1, wherein the digestion residue used as starting material is washed with sulphuric acid having a concentration of more than 50 % by weight.

8. Process according to claim 1, wherein the digestion residue used as starting material is pretreated in such a way that the liquid phase has a sulphuric acid content of more than 35 % by weight.

9. Process according to claim 8, wherein the digestion residue used as starting material is pretreated in such a way that the liquid phase has a sulphuric acid content of more than 50 % by weight.

10. Process according to claims 6 and 7, wherein the digestion residue used as starting material is pretreated by means of a filter press in such a way that is has a solids content of more than 65 % by weight with respect to the total weight of the digestion residue, then washed with sulphuric acid at a concentration of more than 50 % by weight and made into a slurry again in a sulphuric acid having a concentration of more than 50 % by weight and was then filtered once again by means of a filter press.

11. Process according to claim 2, wherein the digestion residue before being used for the digestion reaction is subjected to mill drying.

12. Process according to claim 11, wherein the digestion residue prior to mill drying is subjected to washing or neutralisation followed by washing.

13. Process according to any of the preceding claims, wherein prior to the start of the digestion reaction the reaction mixture is heated to a temperature of 80 °C to 115 °C.

14. Process according to any of the preceding claims, wherein the sulphuric acid content of the liquid phase of the slurry amounts to 80 to 95 % by weight after the start of the digestion reaction.

15. Process according to claim 14, wherein the sulphuric acid content of the liquid phase of the slurry amounts to 82 to 90 % by weight after the start of the digestion reaction.

16. Process according to any of the preceding claims, wherein the temperature of the reaction mixture rises to at least 180 °C after the start of the digestion reaction.

17. Process according to claim 16, wherein the temperature of the reaction mixture rises to at least 200 °C after the start of the digestion reaction.

18. Process according to any of the preceding claims, wherein as a consequence of the exothermic reaction the temperature increase of the reaction mixture after step (b) or (b') amounts to 20 °C, preferably at least 40 °C.

19. Process according to any of the preceding claims, **characterised in that** the degree of digestion of the TiO₂ introduced by the digestion residue amounts to at least 50 %, preferably at least 70 %.

20. Process according to any of the preceding claims, **characterised in that** prior to the addition in step (a) or (a') the digestion residue is used to cover the raw materials usually used for titanium dioxide production, e.g. ilmenite or titanium slag, as a result of which drift losses due to wind are prevented and this mixture is used as raw material containing TiO₂.

21. Process according to any of the preceding claims, **characterised in that** the solids-rich underflow of a concentrator used for clarification of the solids-containing black solution is used as raw material containing TiO₂.

22. Process according to any of the preceding claims, **characterised in that** the weight ratio of H₂SO₄/TiO₂ after step (b) or (b') is 1.5 to 3.5.

## Revendications

1. Procédé de production de dioxyde de titane à partir de résidus de désagrégation du procédé au sulfate classique pour la production de dioxyde de titane, comprenant les étapes de :
(a) mélanger les matériaux de départ contenant du TiO₂ de telle sorte que 60 à 100 % en poids du TiO₂ utilisé sous la forme de résidu de désagrégation et 0 à 40 % en poids du TiO₂ utilisé sous la forme de matières premières utilisées habituellement soient mélangés avec de l'acide sulfurique, moyennant quoi une suspension présentant une teneur en acide sulfurique en phase liquide de 50 à 85 % en poids est formée ;
(b) chauffer le mélange réactionnel à une température de 60° C à 150° C et ensuite, ajouter de l'acide sulfurique fumant pour initier la réaction de désagrégation ;
(c) dissoudre le produit réactionnel obtenu ;
(d) séparer les substances solides non dissoutes de la phase liquide ;
(e) retirer le dioxyde de titane de la phase aqueuse.

2. Procédé de production de dioxyde de titane à partir de résidus de désagrégation d'un procédé au sulfate pour produire du dioxyde de titane, comprenant les étapes de :
(a') mélanger les matériaux de départ contenant du TiO₂ de telle sorte que 60 à 100 % en poids du TiO₂ utilisé sous la forme d'un résidu de désagrégation contenant du TiO₂ séché et 0 à 40 % en poids du TiO₂ utilisé sous la forme de matières premières utilisées habituellement soient mélangés avec de l'acide sulfurique, moyennant quoi une suspension présentant une teneur en acide sulfurique en phase liquide d'au moins 86 % en poids est formée ;
(b') chauffer le mélange réactionnel à une température de 60° C à 150° C et ensuite, ajouter de l'eau ou de l'acide sulfurique dilué pour initier la réaction de désagrégation ;
(c') dissoudre le produit réactionnel obtenu ;
(d') séparer les substances solides non dissoutes de la phase liquide ;
(e') retirer le dioxyde de titane de la phase aqueuse.

3. Procédé selon l'une quelconque des revendications précédentes, dans lequel, dans les matériaux de départ contenant du TiO₂, 80 à 100 % u TiO₂ utilisé sont utilisés sous la forme de résidu de désagrégation et 0 à 20 % du TiO₂ utilisé sont utilisés sous la forme de matières premières utilisées habituellement.

4. Procédé selon la revendication 3, dans lequel on utilise comme matériau de départ contenant du TiO₂, jusqu'à 100 % de résidu de désagrégation.

5. Procédé selon la revendication 1, dans lequel est formée par mélange du résidu de désagrégation avec de l'acide sulfurique avant addition de l'acide sulfurique fumant, une suspension présentant une teneur en acide sulfurique en phase liquide de 60 à 80 % en poids.

6. Procédé selon la revendication 1, dans lequel le résidu de désagrégation utilisé comme matériau de départ est traité au préalable par une presse de filtrage de telle sorte qu'il présente une teneur en solides supérieure à 65 % en poids par rapport au poids total du résidu de désagrégation.

7. Procédé selon la revendication 1, dans lequel le résidu de désagrégation utilisé comme matériau de départ est lavé avec de l'acide sulfurique à une concentration supérieure à 50 % en poids.

8. Procédé selon la revendication 1, dans lequel le résidu de désagrégation utilisé comme matériau de départ est traité au préalable de telle sorte que la phase liquide présente une teneur en acide sulfurique supérieure à 35 % en poids.

9. Procédé selon la revendication 8, dans lequel le résidu de désagrégation utilisé comme matériau de départ est traité au préalable de telle sorte que la phase liquide présente une teneur en acide sulfurique supérieure à 50 % en poids.

10. Procédé selon les revendications 6 et 7, dans lequel le résidu de désagrégation utilisé comme matériau de départ est traité au préalable avec une presse de filtrage de telle sorte qu'il présente une teneur en solides supérieure à 65 % en poids par rapport au poids total du résidu de désagrégation, est ensuite lavé avec l'acide sulfurique à une concentration supérieure à 50 % en poids et est remis en suspension dans un acide sulfurique à une concentration supérieure à 50 % en poids et est ensuite filtré à nouveau avec une presse de filtrage.

11. Procédé selon la revendication 2, dans lequel le résidu de désagrégation est soumis à un séchage par broyage avant l'utilisation pour la réaction de désagrégation.

12. Procédé selon la revendication 11, dans lequel le résidu de désagrégation est soumis à un lavage ou à une neutralisation avec un lavage consécutif avant le séchage par broyage.

13. Procédé selon l'une quelconque des revendications précédentes, dans lequel le mélange réactionnel est chauffé à une température de 80° C à 115° C avant le début de la réaction de désagrégation.

14. Procédé selon l'une quelconque des revendications précédentes, dans lequel la teneur en acide sulfurique de la phase liquide de la suspension est de 80 à 95 % en poids après le début de la réaction de désagrégation.

15. Procédé selon la revendication 14, dans lequel la teneur en acide sulfurique de la phase liquide de la suspension est de 82 à 90 % en poids après le début de la réaction de désagrégation.

16. Procédé selon l'une quelconque des revendications précédentes, dans lequel la température du mélange réactionnel s'élève à au moins 180° C après le début de la réaction de désagrégation.

17. Procédé selon la revendication 16, dans lequel la température du mélange réactionnel s'élève à au moins 200° C après le début de la réaction de désagrégation.

18. Procédé selon l'une quelconque des revendications précédentes, dans lequel l'augmentation de température du mélange réactionnel après l'étape (b) ou (b') consécutive à la réaction exothermique est d'au moins 20° C, de préférence d'au moins 40° C.

19. Procédé selon l'une quelconque des revendications précédentes, **caractérisé en ce que** le degré de désagrégation du TiO₂ mis en oeuvre avec le résidu de désagrégation est d'au moins 50 %, de préférence d'au moins 70 %.

20. Procédé selon l'une quelconque des revendications précédentes, **caractérisé en ce que** le résidu de désagrégation est utilisé avant la conduite de l'étape (a) ou (a') pour couvrir les matières premières utilisées habituellement pour la production de dioxyde de titane, par exemple l'ilménite ou les scories de titane, des émanations étant éliminées par le vent, et ce mélange étant utilisé comme matière première contenant du TiO₂.

21. Procédé selon l'une quelconque des revendications précédentes, **caractérisé en ce que** le tamisat riche en solides d'un décanteur utilisé pour la clarification de la solution noire contenant les substances solides est utilisé comme matière première contenant du TiO₂.

22. Procédé selon l'une quelconque des revendications précédentes, **caractérisé en ce que** le rapport en poids de H₂SO₄/TiO₂ après l'étape (b) ou (b') est de 1,5 à 3,5.
